# EUROPEAN PATENT SPECIFICATION

(11) **EP 3 006 153 B1**
(45) Date of publication and mention of the grant of the patent: **04.07.2018**
(21) Application number: 15176041.0
(22) Date of filing: 09.07.2015
(51) Int. Cl.: B23K 9/095, B23K 26/03, B23K 31/12, G01N 29/04

(54) **SYSTEM AND METHOD OF MAKING A WELDED ASSEMBLY**
SYSTEM UND VERFAHREN ZUR HERSTELLUNG EINER SCHWEISSANORDNUNG
SYSTÈME ET PROCÉDÉ DE FABRICATION D'UN ENSEMBLE SOUDÉ

(30) Priority: 16.09.2014 US 201414487787
(43) Date of publication of application: 13.04.2016
(73) Proprietor: ArvinMeritor Technology, LLC, Troy, MI 48084 (US)
(72) Inventor: Zhai, Yang, Rochester Hills, MI Michigan 48307 (US); Melekian, Joseph, Rochester Hills, MI Michigan 48307 (US); Leicht, Phillip, South Lyon, MI Michigan 48178 (US)
(74) Representative: Jones, John Bryn

(56) References cited:
- EP-A1- 2 660 493
- WO-A1-2004/054749
- JP-A- S6 234 669
- JP-A- S60 127 080

## Description

### TECHNICAL FIELD

This patent application relates to a system and method of making a welded assembly.

### BACKGROUND

A weld inspection scanner is disclosed in U.S. Patent No. 8,037,763. Japanese patent application No. JP S62 34669 A describes automatic welding equipment comprising an ultrasonic sensor. A method and a system according to the preamble of claim 1 and claim 8 is known from JP S 62 34669 A.

### SUMMARY

In at least one embodiment, a method of making a welded assembly is provided. The method may include determining a gap profile between a first part and a second part with an ultrasonic inspection device that transmits an ultrasonic beam. The gap profile may be determined by transmitting the ultrasonic beam and receiving reflected signals that may be indicative of a gap between the first part and the second part. The first and second parts may be welded based on the welding parameters that may be selected based on the gap profile when a gap of the gap profile does not exceed a gap threshold value.

In at least one embodiment, a system for making a welded assembly according to claim 8. is provided.

### BRIEF DESCRIPTION OF THE DRAWINGS

Figure 1 illustrates an exemplary system for making a welded assembly.
Figure 2 is a section view of a welded assembly that is configured as a differential assembly.
Figure 3 is a flowchart of a method of making a welded assembly.
Figure 4 is a magnified view of a first part and a second part prior to welding.
Figure 5A is a magnified view of a properly located weld.
Figure 5B represents an image from an ultrasonic inspection device of the weld of Figure 5A.
Figure 6A is a magnified view of an improperly located weld.
Figure 6B represents an image from an ultrasonic inspection device of the weld of Figure 6A.
Figure 7A is a magnified view of an exemplary weld having discontinuities.
Figure 7B represents an image from an ultrasonic inspection device of the weld of Figure 7A.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

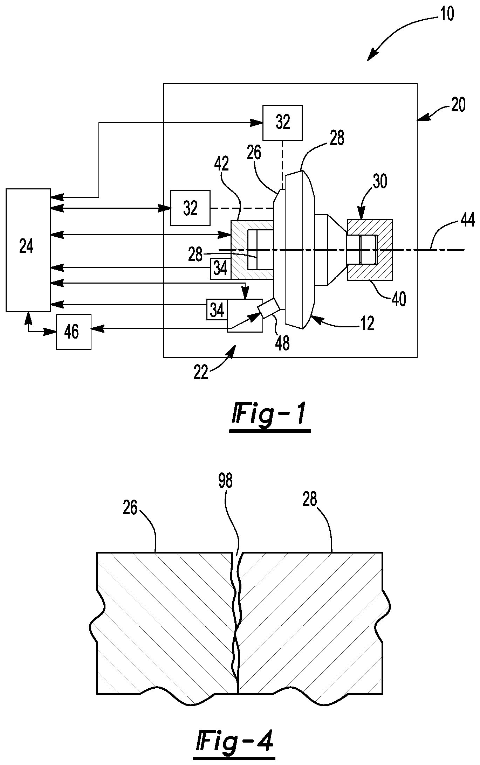

Referring to Figure 1, an exemplary system 10 for making a welded assembly 12 is shown. The system 10 may include a welding system 20, an ultrasonic inspection device 22, and a control system 24.

The welding system 20 may be configured to weld a first part 26 to a second part 28 to form the welded assembly 12. In Figure 1, two parts are labeled second parts 28 to make it clear that the welding system 20 may weld multiple parts together. The welding system 20 may include a fixture subsystem 30, one or more welding units 32, and an encoder 34.

The fixture subsystem 30 may be configured to support one or more parts. For instance, the fixture subsystem 30 may directly or indirectly support and/or receive the first part 26 and/or the second part 28. In the embodiment shown in Figure 1, the fixture subsystem 30 includes a first fixture 40 and a second fixture 42. The first and/or second fixtures 40, 42 may be configured to grasp and secure the one or more parts such that the one or more parts may not move with respect to the fixture subsystem 30. In addition, the fixture subsystem 30 may be configured to rotate one or more parts, such as the first and second parts 26, 28 about an axis 44. For example, an actuator such as a motor may be provided that may facilitate rotation of the fixture subsystem 30 about the axis 44. It is also contemplated that the fixture subsystem 30 may not provide rotational functionality in one or more embodiments.

One or more welding units 32 may be disposed proximate the fixture subsystem 30. A welding unit 32 may be configured to execute one or more welds that may couple the first part 26 to the second part 28. In Figure 1, two welding units 32 are shown; however, it is contemplated that a greater or lesser number of welding units 32 may be provided. The welding units 32 may be of any suitable type. For example, a welding unit 32 may be configured to provide a weld of any suitable type, such as a laser weld or an arc weld. In Figure 1, the welding units 32 are illustrated as laser welding units in which exemplary laser welding beams are depicted with dashed lines. The welding units 32 may be stationary or may be configured to move or rotate about the axis 44 so that a weld may be provided that may extend at least partially around the axis 44.

The encoder 34 may provide data indicative of the rotational position or angular position of the fixture subsystem 30 and/or the first and second parts 26, 28 with respect to the axis 44. The encoder 34 may be of any suitable type, and may be disposed in any suitable location for detecting rotational or angular movement. Angular position data from the encoder 34 may be associated with data obtained by the ultrasonic inspection device 22, thereby allowing the angular position of data or data points detected by the ultrasonic inspection device 22 to be known and stored. The encoder 34 may be omitted in configurations where the fixture subsystem 30 is stationary.

The ultrasonic inspection device 22 may be used for inspection before and/or after executing a weld with the welding system 20. The ultrasonic inspection device 22 may transmit one or more ultrasonic beams into or through the first part 26, the second part 28, and/or a weld that may join the first part 26 to the second part 28. Any suitable ultrasonic inspection device may be used. An example of a suitable ultrasonic inspection device 22 is a General Electric Phasor XS Series portable phased array ultrasonic flaw detector. The ultrasonic inspection device 22 may include a main unit 46 and a probe 48.

The main unit 46 may include a controller or control unit that may control operation of the ultrasonic inspection device 22. In addition, the main unit 46 may include a keypad or operator input device and a display.

The probe 48 may communicate with the main unit and may include one or more ultrasonic beam transducers that may transmit an ultrasonic beam. For example, multiple transducers may be provided that each transmit or emit an ultrasonic beam in a fixed direction or the ultrasonic inspection device 22 may have a one or more transducers that may employ phased array ultrasonics to transmit or emit an ultrasonic beam that may be electronically steered. In addition, the transducer or transducers may receive reflected signals or reflected ultrasonic waveforms. The ultrasonic inspection device 22 may process the reflected signals and identify and provide quantitative data based on the reflected signals that may be indicative of one or more gaps located between the first part 26 and the second part 28 before welding the first part 26 to the second part 28. Such data may be used to control the welding system 20 to vary the size of a weld that may join the first part 26 to the second part 28 as will be discussed in more detail below. In addition, the ultrasonic inspection device 22 may identify and provide quantitative data based on the reflected signals that may be indicative of discontinuities located in the weld and/or adjacent to the weld as will be discussed in more detail below.

An encoder 34 may be associated with the ultrasonic inspection device 22. The encoder may provide data indicative of the rotational position or angular position of the probe with respect to the axis 44. Angular position data from the encoder 34 may be associated with data obtained by the ultrasonic inspection device 22, thereby allowing the angular position of data or data points detected by the ultrasonic inspection device 22 to be known and stored. An encoder 34 that is detects angular movement or position of the probe 48 may be omitted in configurations where the probe 48 is stationary.

The control system 24 may monitor and control operation of components of the system 10. The control system 24 may include a microprocessor-based controller or control module that may monitor and/or control various components, such as the welding system 20 and the ultrasonic inspection device 22. The control system 24 may also communicate with various sensors or input devices. For instance, the control system 24 may be configured to receive a signal or data from an encoder 34 and/or the main unit 46.

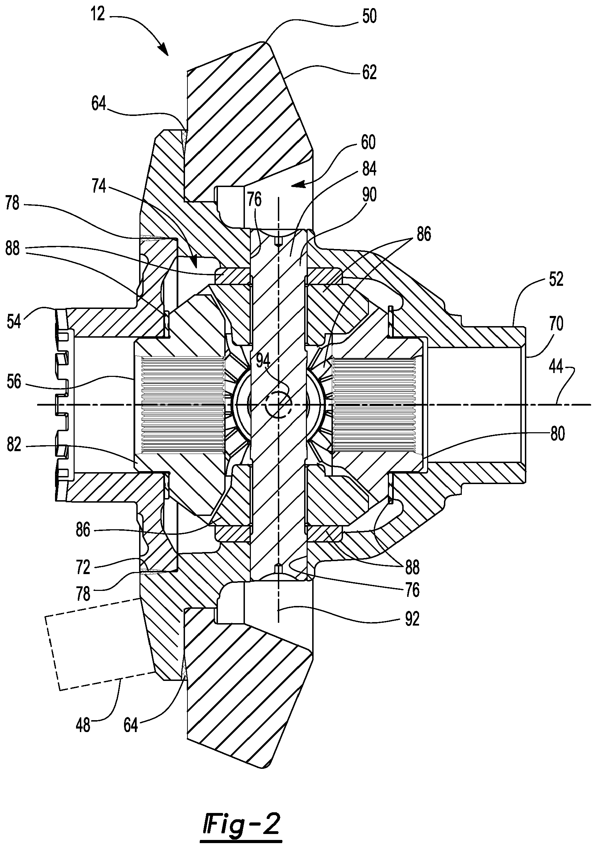

Referring to Figure 2, an exemplary welded assembly 12 is shown. In Figure 2, the welded assembly 12 is configured as a differential assembly that may be provided with a vehicle drivetrain assembly, such as an axle assembly, transfer case, or wheel hub assembly. The differential assembly may transmit torque in a manner that permits two different shafts, such as wheel axles to rotate at different velocities. In at least one embodiment, the differential assembly may include a ring gear 50, a differential case 52, a differential cap 54, and a differential unit 56. For illustration purposes, the differential case 52 may be a first part 26 and the ring gear 50 and/or the differential cap 54 may be a second part 28.

The ring gear 50 may be configured to rotate about the axis 44. The ring gear 50 may have a center hole 60 and a set of teeth 62. The center hole 60 may extend around the axis 44 and may receive the differential case 52. The ring gear 50 may be fixedly disposed on the differential case 52. For example, the ring gear 50 may be welded to the differential case 52 with a first weld 64. The first weld 64 may extend continuously around the axis 44 and may be located on opposite side of the ring gear 50 from the set of teeth 62. In one or more embodiments, the first weld 64 may extend generally perpendicular to the axis 44. The set of teeth 62 may be arranged around the center hole 60 and may engage and mate with corresponding teeth of another gear, such as a pinion gear, that may rotate about a different axis than axis 44.

The differential case 52 may receive various components of the differential assembly. For example, the differential case 52 may be disposed proximate and may receive the differential cap 54 and/or the differential unit 56. The differential case 52 may be configured to rotate with respect to a housing that may support the differential assembly. For instance, the differential case 52 may be rotatably disposed on a bearing that may be disposed in the housing and that may facilitate rotation of the differential assembly about the axis 44. In at least one embodiment, the differential case 52 may include a first opening 70, a second opening 72, a cavity 74, and a set of spider pin holes 76.

The first opening 70 may extend around the axis 44 and may be configured to receive a first shaft that may be operatively coupled to the differential unit 56. For example, the first shaft may receive torque from the differential unit 56.

The second opening 72 may extend around the axis 44 and may be disposed opposite the first opening 70. The second opening 72 may be configured to receive the differential cap 54.

The cavity 74 may be disposed between the first opening 70 and the second opening 72. The cavity 74 may extend along the axis 44 and may be configured to receive the differential unit 56.

The set of spider pin holes 76 may be arranged around the axis 44. The set of spider pin holes 76 may extend from the cavity 74 and may be disposed between the ring gear 50 and the cavity 74.

The differential cap 54 may be disposed proximate and may be received in the first opening 70 of the differential case 52. The differential cap 54 may include a differential cap opening. The differential cap opening may extend around the axis 44 be configured to receive a second shaft that may be operatively coupled to the differential unit 56. For example, the second shaft may receive torque from the differential unit 56.

The differential cap 54 may be fixedly disposed on the differential case 52. As such, the differential cap 54 may rotate with the differential case 52 about the axis 44. In addition, the differential cap 54 may be rotatably disposed on a bearing that may be disposed in the housing and that may facilitate rotation of the differential assembly about the axis 44.

The differential cap 54 may be welded to the differential case 52 with a second weld 78. The second weld 78 may extend continuously around the axis 44 and may be generally located on opposite side of the ring gear 50 from the set of teeth 62. In one or more embodiments, the second weld 78 may extend generally parallel to the axis 44. The second weld 78 may be completely spaced apart from the first weld 64. In addition, the second weld 78 may extend at an angle with respect to the first weld 64. For example, the first weld 64 may extend substantially perpendicular to the second weld 78 in one or more embodiments.

The differential unit 56 may be configured to permit the first shaft and the second shaft to rotate at different speeds or inhibit the first shaft and the second shaft from rotating at different speeds. The differential unit 56 may be generally disposed in the center hole 60 of the ring gear 50 and may be disposed in the cavity 74 of the differential case 52. In at least one embodiment, the differential unit 56 may include a first gear 80, a second gear 82, a spider 84, and a plurality of pinion gears 86.

The first gear 80 may be disposed proximate the differential case 52 and may be coupled to the first shaft. For example, the first gear 80 may be disposed along the axis 44 and may have a center bore. The center bore may receive the first shaft such that the first gear 80 may not rotate with respect to the first shaft. The first gear 80 may include a set of teeth that may be arranged on a side or face of the first gear 80 that faces toward the spider 84 and pinion gears 86. A thrust washer 88 may be provided between the first gear 80 and the differential case 52 to inhibit movement along the axis 44 or axial movement of the first gear 80 away from the second gear 82.

The second gear 82 may be spaced apart from and may be disposed opposite the first gear 80. The second gear 82 may have substantially the same configuration as the first gear 80 in one or more embodiments. The second gear 82 may be disposed proximate the differential cap 54 and may be coupled to the second shaft. For example, the second gear 82 may extend along the axis 44 and may have a center bore. The center bore may receive the second shaft such that the second gear 82 may not rotate with respect to the second shaft. The second gear 82 may also include a set of teeth that may be arranged on a side or face of the second gear 82 that faces toward the spider 84 and pinion gears 86. A thrust washer 88 may be provided between the second gear 82 and the differential cap 54 to inhibit axial movement of the second gear 82 away from the first gear 80.

The spider 84 may be disposed in the differential case 52 and may be configured to rotate about the axis 44 with respect to the first gear 80 and/or the second gear 82. The spider 84 may include a set of pins 90 that may be arranged along a first spider axis 92 and a second spider axis 94. The first spider axis 92 and the second spider axis 94 may intersect and may be disposed substantially perpendicular to each other and substantially perpendicular to the axis 44. Ends of the pins 90 may be received in a corresponding spider pin hole 76 in the differential case 52 and may be spaced apart from the housing so as not to interfere with rotation of the differential unit 56.

A pinion gear 86 may be rotatably disposed on each pin 90. Each pinion gear 86 may be generally disposed in the cavity 74 of the differential case 52 and may be retained on a corresponding pin 90 with a thrust washer 88. For instance, two pinion gears 86 may rotate about corresponding pins 90 that may extend along the first spider axis 92 and two pinion gears 86 may rotate about corresponding pins 90 that may extend along the second spider axis 94. Each pinion gear 86 may include a set of teeth that may mate with teeth of the first gear 80 and the second gear 82.

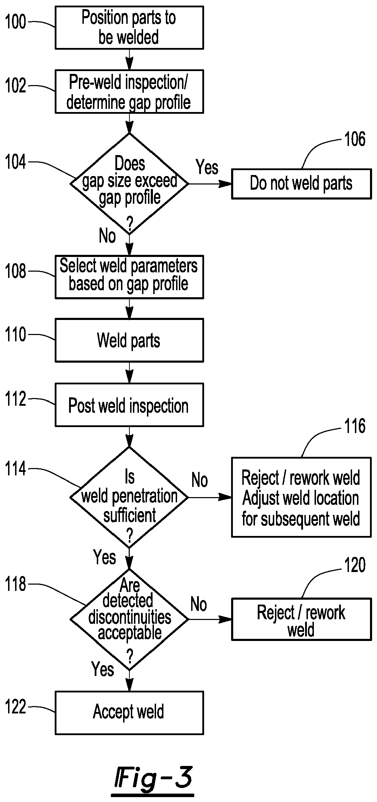

Referring to Figure 3, a flowchart of a method of making a welded assembly is shown. The welded assembly may be made using the system 10 previously described. The method will primarily be described with the reference to welding a first part to a second part. For example, in the context of a differential assembly, the first part 26 may be the differential case and the second part 28 may be the ring gear and or the differential cap.

At block 100, the method may position the parts that are to be welded. For example, the first part 26 and the second part 28 may be positioned in a clamp or fixture of the fixture subsystem 30 such that the first part 26 may be disposed adjacent to the second part 28 at a location or region to be welded. As such, at least one surface of the first part 26 may be disposed proximate and may engage at least one surface of the second part 28 proximate a desired weld location. An example of positioning of a first part 26 and a second part 28 prior to welding is shown in Figure 4. In Figure 4, a surface of the first part 26 is disposed adjacent to a surface of the second part 28. Ideally, the surface of the first part 26 and the surface of the second part 28 may abut each other such that no gaps may be present between the surfaces in the region to be welded. However, one or more gaps 98 may exist between the surfaces due to irregularities (e.g., contaminants, voids, protrusions, etc.), surface finish variations, or other factors. As such, the surface of the first part 26 may differ from the surface of the second part 28 such that one or more gaps may be present between the surfaces.

At block 102, a pre-weld inspection may be performed to determine a gap profile. The pre-weld inspection may be performed using the ultrasonic inspection device 22. The gap profile may be determined by transmitting one or more ultrasonic beams and then receiving reflected signals that may be indicative of the relative positioning between the first part 26 and the second part 28. For example, the ultrasonic inspection device 22 may transmit one or more ultrasonic beams through the first part 26 to or toward the second part 28, and then receive reflected signals that may be indicative of a gap or distance between the first part 26 and the second part 28.

The gap profile may be determined prior to welding along a region where the weld is to be provided. The first and second parts 26, 28 and the ultrasonic inspection device 22 may move with respect to each other during the pre-weld inspection so that a gap profile may be generated along an extended distance. For example, the first and second parts 26, 28 may be held in a stationary position while the ultrasonic inspection device 22 moves or rotates about the axis 44 with respect to the first and second parts 26, 28. The ultrasonic inspection device 22 may move or rotate over a predetermined angular distance during the pre-weld inspection. For example, the ultrasonic inspection device 22 may rotate approximately 360° or at least one revolution around or about the axis 44 when a weld is to extend continuously around the axis 44. Alternatively, the ultrasonic inspection device 22 may be held in a stationary position while the first and second parts 26, 28 move or rotate together (e.g., not with respect to each other) about the axis 44 with respect to the ultrasonic inspection device 22. For example, the fixture subsystem 30 of the welding system 20 may rotate the first and second parts 26, 28 approximately 360° or at least one revolution around the axis 44 when a weld is to extend continuously around the axis 44. As another option, the ultrasonic inspection device 22 and the first and second parts 26, 28 may simultaneously rotate about the axis 44 with respect to each other. For example, the ultrasonic inspection device 22 may rotate in a first direction about the axis 44 while the first and second parts 26, 28 may rotate together in a second direction or opposite direction about the axis 44. Thus, a gap profile may be generated that may include data points that may be indicative of gaps or distances between the first part 26 and the second part 28 at multiple angular positions and thus over a three-dimensional area. The gap profile may be associated with angular positions provided with one or more encoders 34 as previously discussed.

The probe 48 of the ultrasonic inspection device 22 may be in direct physical contact with a part, such as the first part 26 or the second part 28, when ultrasonic signals are transmitted and reflected. For example, the probe 48 may engage a surface of the first part 26 and may be spaced apart from the weld that is being inspected. Alternatively, or in addition, a lubricant or gel may be provided between the probe 48 and the part to facilitate ultrasonic inspection and/or relative rotational movement between the probe 48 and the first and second parts 26, 28. The probe 48 may be separated from the part prior to welding to avoid potential thermal damage to the probe 48. In addition, the pre-weld inspection may be performed without submerging the parts in a water bath.

At block 104, the method may determine whether a gap size exceeds a gap threshold. For instance, the method may determine a maximum gap of the gap profile or a maximum distance between the first part 26 and the second part 28, and compare the maximum distance to a gap threshold value. The gap threshold value may be indicative of a gap size at or beyond which the welding system 20 may not be capable of providing an adequate weld. The gap threshold value may be a predetermined value that may be based on development testing. If the gap size or maximum gap exceeds the gap threshold value, then method or method iteration may end at block 106 without welding the first part to the second part. If the gap size or maximum gap does not exceed the gap threshold value, then the method may continue at block 108.

At block 108, weld parameters may be selected based on the gap profile. The weld parameters may be adjusted during welding to vary the size of the weld in proportion to the gap profile. As such, the system 10 may be operated to vary the configuration of a weld to attempt to properly join the first part 26 to the second part 28 and eliminate gaps between the first part 26 and the second part 28 over a desired or target weld penetration distance. For example, the rotational speed or angular velocity between the welding system 20 and the first and second parts 26, 28 may be varied, such as by decreasing the relative angular velocity when a larger weld size is desired. Other weld parameters may also be varied that may be dependent upon the type of welding employed. For example, in a welding system 20 that employs laser welding, the power provided to the laser may increase as the gap size proximate the focal point increases. In a welding system 20 that employs a filler material like consumable wire electrode, such as arc welding or braze welding, the amount of filler material or wire electrode feed rate may increase as the gap size increases.

At block 110, the first and second parts 26, 28 may be welded together or provided with one or more welds 64, 78. The first and second parts 26, 28 may be welded together using the welding system 20 and may be operated using the selected weld parameters. The first and second parts 26, 28 and the welding unit 32 may move with respect to each other during welding. For example, the first and second parts 26, 28 may be rotated about the axis 44 with respect to a stationary welding unit 32, the welding unit 32 may be rotated about the axis 44 with respect to stationary first and second parts 26, 28, or the first and second parts 26, 28 and the welding unit 32 may be simultaneously rotated in opposite directions, similar to the relative movement options between the probe 48 and the first and second parts 26, 28 previously described with respect to block 102. For example, a continuous weld that extends completely around the axis 44 may be provided by rotating the welding unit 32 and/or the first and second parts 26, 28 approximately 360° about or around the axis 44.

At block 112, a post-weld inspection may be performed to assess the configuration and quality of the weld. The post-weld inspection may be executed or performed using the ultrasonic inspection device 22 in a similar manner as the pre-weld inspection previously discussed at block 102. As such, one or more ultrasonic beams may be emitted or transmitted and then reflected signals may be received. In addition, relative motion between the welded first and second parts 26, 28 and the probe 48 may be provided to facilitate inspection of the entire weld or a desired portion of the weld 64, 78. For example, the welded first and second parts 26, 28 may be rotated about the axis 44 with respect to the probe 48 of the ultrasonic inspection device 22 or vice versa. The reflected signals may be indicative of the configuration of the weld (e.g., weld size, weld penetration distance, etc.) and may be indicative of discontinuities located within or near the weld. Discontinuities may include voids or cavities within the weld (weld porosity, weld cracks, etc.) and voids or cavities adjacent to the weld (cracks along the heat affected zone adjacent to the weld, voids or gaps that were not filled by the weld, etc.). Moreover, the size, shape, and/or position of discontinuities may be measured and quantified.

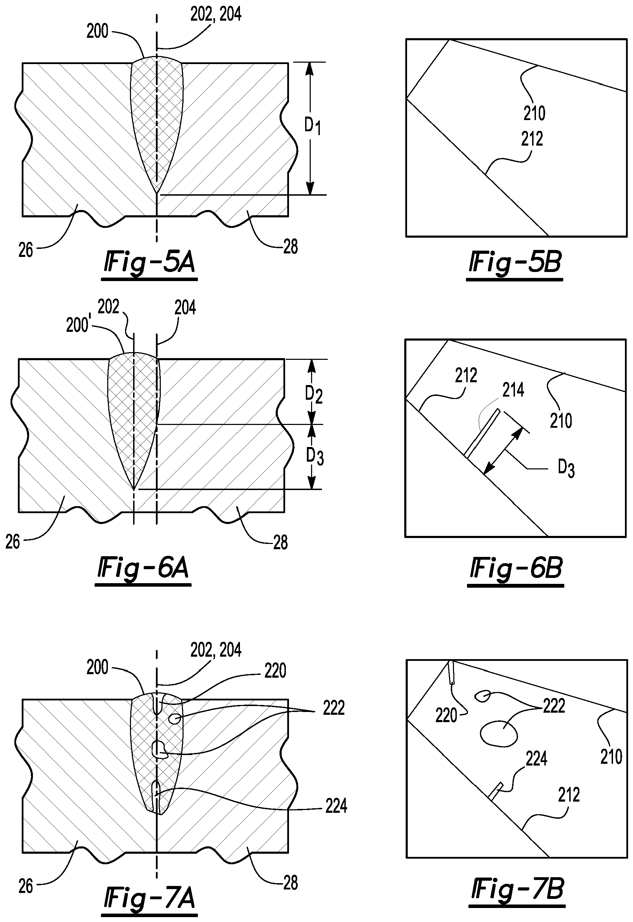

At block 114, the weld penetration distance or weld penetration depth may be assessed. The weld penetration distance may be based on the reflected signals obtained during the post-weld inspection. Weld penetration distance may be best understood with reference to Figures 5A and 5B and Figures 6A and 6B.

In Figure 5A, a weld that has a proper location is shown. In Figure 5A, the weld 200, which may be the first weld 64 or the second weld 78, is centered about line 202 and has a weld penetration distance D1. Line 202 may be referred to as a weld center line 202. In Figure 5A, the weld center line 202 may substantially coincide with a targeted weld location or a desired weld center line 204. The weld penetration distance D1 may be measured from the top of the weld 200 to the bottom of the weld 200.

In Figure 5B, an associated image of this weld 200 that may be provided by the ultrasonic inspection device 22 is shown. The boundary lines 210 and 212 may represent or include the expected locations of the top and bottom of the weld 200, respectively, while the region between the boundary lines 210 and 212 may depict the area between the top and bottom of the weld 200. In Figure 5B, no lines or artifacts are shown between boundary lines 210 and 212, which is indicative of an adequate weld penetration distance.

In Figure 6A, a weld 200' that does not have a proper location is shown. In Figure 6A, the weld 200' is again centered about line 202 and has a weld penetration distance D2. The weld penetration distance D2 or distance from the top of the weld 200' to the bottom of the weld 200' is approximately half of weld penetration distance D1. This reduced weld penetration distance is a result of misalignment of the weld center line 202 and the targeted weld location or desired weld center line 204. This misalignment results in no weld being provided along distance D3.

In Figure 6B, the lack of a weld along distance D3 is depicted as a line 214 that extends from the lower boundary line 212 to a point is representative of the bottom of the weld 200'. The length of line 214 may be proportional to the distance from the bottom of the weld 200' to boundary line 212. As such, post-weld inspection performed by the ultrasonic inspection device 22 may detect and quantify the weld penetration distance, which in turn may allow the misalignment distance between the actual weld center line 202 and the desired weld center line 204 to be quantified and used for quality control to adjust the weld center line 202 into closer proximity with the desired weld center line 204 or desired weld location. For example, the distance and direction in which to move the welding unit 32 (having a location that corresponds with the weld center line 202) with respect to the fixture subsystem 30 (having a location that may correspond to the location of the first and second parts 26, 28 and the desired weld location) may be calculated or based on data in a lookup table, which may be populated during development testing.

If the weld penetration distance is less than the threshold weld penetration distance, then the weld penetration distance may not be sufficient and the method may continue at block 116. If the weld penetration distance is not less than the threshold weld penetration distance, then the weld penetration distance may be sufficient and the method may continue at block 118.

At block 116, the weld may be rejected or reworked and the weld location or alignment may be adjusted for a subsequent weld. The weld location or alignment may be adjusted to attempt to increase the weld penetration distance to at least the threshold weld penetration distance for parts that are subsequently welded. For example, the position of the welding unit 32 may be adjusted with respect to the fixture subsystem 30 or vice versa. As such, the weld center line 202 may be aligned with or positioned closer to the desired weld center line 204, which in turn may increase the weld penetration distance for subsequently welded parts. As such, the method may adjust the positioning of a subsequent weld based on a detected weld penetration distance of a previously welded part when the detected weld penetration distance is less than the threshold weld penetration distance. Accordingly, the method may provide a closed loop system that may automatically detect inadequate weld penetration distances and may automatically adjust the welding system 20 for subsequently welded parts to attempt to meet specifications and reduce scrap.

At block 118, the method may determine whether detected discontinuities in the weld are acceptable. Discontinuities may be assessed based on characteristics of the detected discontinuities, such as quantity and/or volume. Examples of discontinuities are shown in Figures 7A and 7B. In Figure 7A, a weld is shown that has a solidification crack 220, voids 222, and an unwelded region 224. These defects may be detected with the ultrasonic inspection device 22 and may result in the exemplary image shown in Figure 7B. Software of the ultrasonic inspection device 22 may be configured to detect and quantify or define discontinuities in a manner known by those skilled in the art, which in turn may allow individual defects to be counted and may allow their internal volume to be measured. A weld 200 may be acceptable when a total number of weld discontinuities detected by the ultrasonic inspection device 22 is less than a threshold discontinuity quantity and/or when a total internal volume of the weld discontinuities does not exceed a threshold discontinuity volume. The threshold discontinuity quantity and threshold discontinuity volume may be predetermined values that may be based on development testing.

If the total number of weld discontinuities or discontinuities detected in the weld is not less than the threshold discontinuity quantity and/or the total internal volume of the weld discontinuities exceeds the threshold discontinuity volume, then the weld 200 may be rejected at block 120. A welded assembly 12 having a rejected weld may subsequently repaired or reworked or may be scrapped if the weld cannot be adequately repaired or reworked. If the total number of weld discontinuities or discontinuities detected in the weld 200 does not exceed the threshold discontinuity quantity and/or the total internal volume of the weld discontinuities does not exceed the threshold discontinuity volume, then the weld may be accepted at block 122.

In at least one embodiment, the system and method described above may allow a weld to be inspected without destructive testing, without visual inspection (such as by using a die penetrant), and without submerging the weld and associated parts in a water bath. As such, inspection time and associated inspection costs may be reduced. In addition, the system and method may allow weld inspection to be automated and performed as part of a welding assembly line. Moreover, the system and method may allow feedback to be provided to maintain correct weld positioning.

While exemplary embodiments are described above, it is not intended that these embodiments describe all possible forms of the invention. Rather, the words used in the specification are words of description rather than limitation, and it is understood that various changes may be made without departing from the scope of the invention.

## Claims

1. A method of making a welded assembly comprising:
determining a gap profile between a first part (26) and a second part (28) with an ultrasonic inspection device (22) that transmits an ultrasonic beam, wherein the gap profile is determined by transmitting the ultrasonic beam and receiving reflected signals that are indicative of a gap (98) between the first part (26) and the second part (28);
**characterised in that** the method further comprises:
determining whether a gap (98) of the gap profile exceeds a gap threshold value;
selecting weld parameters based on the gap profile when the gap (98) does not exceed the gap threshold value; and
welding the first part (26) to the second part (28) based on the selected weld parameters to form a weld (64, 200).

2. The method of claim 1 wherein the first part (26) is not welded to the second part when a maximum gap of the gap profile exceeds the gap threshold value.

3. The method of claim 1 wherein the gap profile is determined by rotating the first part (26) and the second part (28) about an axis (44) with respect to the ultrasonic inspection device (22) such that the first part (26) does not rotate with respect to the second part (28).

4. The method of claim 3 wherein the first part (26) and the second part (28) rotate at least one revolution about the axis (44) when the first part (26) and the second part (28) are rotated.

5. The method of claim 1 wherein the gap profile is determined by rotating the ultrasonic inspection device (22) about an axis (44) with respect to the first part (26) and the second part (28).

6. The method of claim 1 wherein the weld parameters vary a size of the weld (64, 200) in proportion to the gap profile.

7. The method of claim 1 further comprising executing a post-weld inspection with the an ultrasonic inspection device (22) after welding the first part (26) to the second part (28) by transmitting the ultrasonic beam through the first part (26) to the second part (28) and receiving reflected signals that are indicative of discontinuities (220, 222, 224) in the weld (64, 200), preferably the post-weld inspection includes rotating the first part (26) and the second part (28) about an axis (44) with respect to the ultrasonic inspection device (22).

8. A system (10) for making a welded assembly, the system (10) comprising:
a welding system (20) that is configured to weld a first part (26) to a second part (28); and
an ultrasonic inspection device (22) that transmits an ultrasonic beam through the first part (26) and receives reflected signals that are indicative of a gap (98) between the first part (26) and the second part (28);
**characterised in that**: a control system (24) is provided for monitoring and controlling operation of components of system (10) such that the welding system (20) welds the first part (26) to the second part (28) when a maximum gap of a gap profile, that is based on the reflected signals and is generated before executing a weld (64, 200) with the welding system (20), does not exceed a gap threshold value and the welding system (20) varies a size of the weld (64, 200) that joins the first part (26) to the second part (28) based on the gap profile.

9. The system of claim 8 wherein the weld (64, 200) extends continuously around an axis (44) that extends into the first part (26) and the second part (28).

10. The system of claim 8 wherein the weld (64, 200) is inspected with the ultrasonic inspection device (22) after welding the first part (26) to the second part (28) by transmitting the ultrasonic beam through the first part (26) to the second part (28) and receiving reflected signals that are indicative of discontinuities (220, 222, 224) in the weld (64, 200).

11. The system of claim 8 wherein the first part (26) is a differential case (52) and the second part (28) is a ring gear (50), wherein the differential case (52) and the ring gear (50) cooperate to form at least part of a differential assembly or the first part (26) is a differential case (52) and the second part (28) is a differential cap (54), wherein the differential case (52) and the differential cap (54) cooperate to form at least part of a differential assembly.

## Patentansprüche

1. Verfahren zum Herstellen einer geschweißten Anordnung, umfassend:
Ermitteln eines Spaltprofils zwischen einem ersten Bauteil (26) und einem zweiten Bauteil (28) mit einer Ultraschallinspektionsvorrichtung (22), die einen Ultraschallstrahl überträgt, wobei das Spaltprofil ermittelt wird, indem der Ultraschallstrahl übertragen und reflektierte Signale empfangen werden, die einen Spalt (98) zwischen dem ersten Bauteil (26) und dem zweiten Bauteil (28) anzeigen;
**dadurch gekennzeichnet, dass** das Verfahren außerdem umfasst:
Ermitteln, ob ein Spalt (98) des Spaltprofils einen Spaltschwellenwert überschreitet;
Auswählen der Schweißparameter aufgrund des Spaltprofils, wenn der Spalt (98) den Spaltschwellenwert nicht überschreitet; und
Schweißen des ersten Bauteils an das zweite Bauteil (28) aufgrund der ausgewählten Schweißparameter, um eine Schweißverbindung (64, 200) zu bilden.

2. Verfahren nach Anspruch 1, wobei das erste Bauteil (26) nicht an das zweite Bauteil geschweißt wird, wenn ein maximaler Spalt des Spaltprofils den Spaltschwellenwert überschreitet.

3. Verfahren nach Anspruch 1, wobei das Spaltprofil ermittelt wird, indem das erste Bauteil (26) und das zweite Bauteil (28) um eine Achse (44) in Bezug auf die Ultraschallinspektionsvorrichtung (22) so gedreht wird, dass sich das erste Bauteil (26) in Bezug auf das zweite Bauteil (28) nicht dreht.

4. Verfahren nach Anspruch 3, wobei sich das erste Bauteil (26) und das zweite Bauteil (28) um mindestens eine Umdrehung um die Achse (44) drehen, wenn das erste Bauteil (26) und das zweite Bauteil (28) gedreht werden.

5. Verfahren nach Anspruch 1, wobei das Spaltprofil ermittelt wird, indem die Ultraschallinspektionsvorrichtung (22) um eine Achse (44) in Bezug auf das erste Bauteil (26) und das zweite Bauteil (28) gedreht wird.

6. Verfahren nach Anspruch 1, wobei die Schweißparameter eine Größe der Schweißverbindung (64, 200) in Proportion zu dem Spaltprofil variieren.

7. Verfahren nach Anspruch 1, das außerdem umfasst: Ausführen einer Nachschweißinspektion mit der Ultraschallinspektionsvorrichtung (22) nach dem Schweißen des ersten Bauteils (26) an das zweite Bauteil (28), indem der Ultraschallstrahl durch das erste Bauteil (26) zu dem zweiten Bauteil (28) übertragen wird, und Empfangen von reflektierten Signalen, die Unregelmäßigkeiten (220, 222, 224) in der Schweißverbindung (64, 200) anzeigen, wobei die Nachschweißinspektion vorzugsweise ein Drehen des ersten Bauteils (26) und des zweiten Bauteils (28) um eine Achse (44) in Bezug auf die Ultraschallinspektionsvorrichtung (22) umfasst.

8. System (10) zum Herstellen einer geschweißten Anordnung, wobei das System (10) umfasst:
ein Schweißsystem (20), das konfiguriert ist, um ein erstes Bauteil (216) an ein zweites Bauteil (28) zu schweißen; und
eine Ultraschallinspektionsvorrichtung (22), die einen Ultraschallstrahl durch das erste Bauteil (26) überträgt und reflektierte Signale empfängt, die einen Spalt (98) zwischen dem ersten Bauteil (26) und dem zweiten Bauteil (28) anzeigen;
**dadurch gekennzeichnet, dass**:
ein Steuersystem (24) bereitgestellt wird zum Überwachen und Steuern eines Betriebs der Komponenten des Systems (10), sodass das Schweißsystem (20) das erste Bauteil (26) an das zweite Bauteil (28) schweißt, wenn ein maximaler Spalt eines Spaltprofils, das auf den reflektierten Signalen beruht und erzeugt wird, bevor eine Schweißverbindung (64, 200) mit dem Schweißsystem (20) ausgeführt wird, einen Spaltschwellenwert nicht überschreitet, und dass das Schweißsystem (20) eine Größe der Schweißverbindung (64, 200) variiert, die das erste Bauteil (26) aufgrund des Spaltprofils mit dem zweiten Bauteil (28) verbindet.

9. System nach Anspruch 8, wobei sich die Schweißverbindung (64, 200) kontinuierlich um eine Achse (44) erstreckt, die sich in das erste Bauteil (26) und das zweite Bauteil (28) erstreckt.

10. System nach Anspruch 8, wobei die Schweißverbindung (64, 200) mit der Ultraschallinspektionsvorrichtung (22) nach dem Schweißen des ersten Bauteils (26) an das zweite Bauteil (28) untersucht wird, indem der Ultraschallstrahl durch das erste Bauteil (26) an das zweite Bauteil (28) übertragen wird und die reflektierten Signale empfangen werden, die Unregelmäßigkeiten (220, 222, 224) in der Schweißverbindung (64, 200) anzeigen.

11. System nach Anspruch 8, wobei das erste Bauteil (26) ein Differentialgehäuse (52) ist und das zweite Bauteil (28) ein Hohlrad (50) ist, wobei das Differentialgehäuse (52) und das Hohlrad (50) zusammenwirken, um mindestens einen Teil einer Differentialgetriebeanordnung zu bilden, oder wobei das erste Bauteil (26) ein Differentialgehäuse (52) ist und das zweite Bauteil (28) eine Differentialgetriebekappe (54) ist, wobei das Differentialgehäuse (52) und die Differentialgetriebekappe (54) zusammenwirken, um mindestens einen Teil einer Differentialgetriebeanordnung zu bilden.

## Revendications

1. Procédé de fabrication d'un ensemble soudé comprenant :
la détermination d'un profil d'interstice entre une première pièce (26) et une deuxième pièce (28) avec un dispositif d'inspection par ultrasons (22) qui transmet un faisceau d'ultrasons, le profil d'interstice étant déterminé par transmission du faisceau d'ultrasons et réception de signaux réfléchis qui sont représentatifs d'un interstice (98) entre la première pièce (26) et la deuxième pièce (28) ;
**caractérisé en ce que** le procédé comprend en outre :
la détermination qu'un interstice (98) du profil d'interstice dépasse ou non une valeur seuil d'interstice ;
la sélection de paramètres de soudure sur la base du profil d'interstice quand l'interstice (98) ne dépasse pas la valeur seuil d'interstice ; et
le soudage de la première pièce (26) à la deuxième pièce (28) sur la base des paramètres de soudure sélectionnés pour former une soudure (64, 200).

2. Procédé de la revendication 1 dans lequel la première pièce (26) n'est pas soudée à la deuxième pièce quand un interstice maximal du profil d'interstice dépasse la valeur seuil d'interstice.

3. Procédé de la revendication 1 dans lequel le profil d'interstice est déterminé par rotation de la première pièce (26) et de la deuxième pièce (28) autour d'un axe (44) par rapport au dispositif d'inspection par ultrasons (22) de telle sorte que la première pièce (26) ne tourne pas par rapport à la deuxième pièce (28).

4. Procédé de la revendication 3 dans lequel la première pièce (26) et la deuxième pièce (28) font au moins un tour autour de l'axe (44) quand la première pièce (26) et la deuxième pièce (28) sont mises en rotation.

5. Procédé de la revendication 1 dans lequel le profil d'interstice est déterminé par rotation du dispositif d'inspection par ultrasons (22) autour d'un axe (44) par rapport à la première pièce (26) et à la deuxième pièce (28).

6. Procédé de la revendication 1 dans lequel les paramètres de soudure font varier une taille de la soudure (64, 200) proportionnellement au profil d'interstice.

7. Procédé de la revendication 1 comprenant en outre l'exécution d'une inspection post-soudure avec le dispositif d'inspection par ultrasons (22) après le soudage de la première pièce (26) à la deuxième pièce (28) par transmission du faisceau d'ultrasons à travers la première pièce (26) jusqu'à la deuxième pièce (28) et réception de signaux réfléchis qui sont représentatifs de discontinuités (220, 222, 224) dans la soudure (64, 200), l'inspection post-soudure comportant de préférence la rotation de la première pièce (26) et de la deuxième pièce (28) autour d'un axe (44) par rapport au dispositif d'inspection par ultrasons (22).

8. Système (10) destiné à fabriquer un ensemble soudé, le système (10) comprenant :
un système de soudage (20) qui est configuré pour souder une première pièce (26) à une deuxième pièce (28) ; et
un dispositif d'inspection par ultrasons (22) qui transmet un faisceau d'ultrasons à travers la première pièce (26) et reçoit des signaux réfléchis qui sont représentatifs d'un interstice (98) entre la première pièce (26) et la deuxième pièce (28) ;
**caractérisé en ce que** :
un système de contrôle (24) est prévu pour la surveillance et le contrôle du fonctionnement de composants du système (10) de telle sorte que
le système de soudage (20) soude la première pièce (26) à la deuxième pièce (28) quand un interstice maximal d'un profil d'interstice, qui est basé sur les signaux réfléchis et est généré avant l'exécution d'une soudure (64, 200) avec le système de soudage (20), ne dépasse pas une valeur seuil d'interstice et le système de soudage (20) fait varier une taille de la soudure (64, 200) qui relie la première pièce (26) à la deuxième pièce (28) sur la base du profil d'interstice.

9. Système de la revendication 8 dans lequel la soudure (64, 200) s'étend de façon continue autour d'un axe (44) qui s'étend à l'intérieur de la première pièce (26) et de la deuxième pièce (8).

10. Système de la revendication 8 dans lequel la soudure (64, 200) est inspectée avec le dispositif d'inspection par ultrasons (22) après le soudage de la première pièce (26) à la deuxième pièce (28) par transmission du faisceau d'ultrasons à travers la première pièce (26) jusqu'à la deuxième pièce (28) et réception de signaux réfléchis qui sont représentatifs de discontinuités (220, 222, 224) dans la soudure (64, 200).

11. Système de la revendication 8 dans lequel la première pièce (26) est un boîtier de différentiel (52) et la deuxième pièce (28) est une couronne dentée (50), le boîtier de différentiel (52) et la couronne dentée (50) coopérant pour former au moins une partie d'un ensemble différentiel, ou bien la première pièce (26) est un boîtier de différentiel (52) et la deuxième pièce (28) est un couvercle de différentiel (54), le boîtier de différentiel (52) et le couvercle de différentiel (54) coopérant pour former au moins une partie d'un ensemble différentiel.
